# DEMANDE DE BREVET EUROPEEN

(11) **EP 4 391 339 A1**
(43) Date de publication de la demande: **26.06.2024**
(21) Numéro de dépôt: 23217794.9
(22) Date de dépôt: 18.12.2023
(51) Int. Cl.: H02M 3/07, H02M 7/483, H02M 3/155, H02M 1/00

(54) **CIRCUIT DE CONVERTISSEUR DE PUISSANCE, CONVERTISSEUR ET INSTALLATION**

(30) Priorité: 19.12.2022 FR 2213822
(71) Demandeur: Commissariat à l'énergie atomique et aux énergies alternatives, 75015 Paris (FR)
(72) Inventeur: PIQUET-BOISSON, Guillaume, 75015 PARIS (FR)
(74) Mandataire: Cabinet Nony

(57) **Abrégé**

Circuit de convertisseur de puissance comportant :
- deux lignes de bus ;
- un condensateur de bus relié auxdites lignes ;
- M cellule(s) comportant chacune deux branches, chaque branche comportant deux interrupteurs, ces deux interrupteurs étant reliés par un point milieu à un port respectif du convertisseur ;
- un étage haut comportant un ou plusieurs interrupteurs reliant la ou les cellules à l'une des lignes du bus ;
- un étage bas comportant un ou plusieurs interrupteurs reliant la ou les cellules à l'autre des lignes de bus, chaque étage haut ou bas définissant avec la ou les cellules N niveaux d'interrupteurs entre la ligne de bus respective et le port associé ;
- des condensateurs flottants, reliés chacun à des noeuds entre interrupteurs des étages d'un même niveau, dont un condensateur flottant par cellule monté en parallèle avec celle-ci.

## Description

### Domaine technique

La présente invention concerne le domaine de l'électronique de puissance, et concerne plus particulièrement les convertisseurs de puissance statiques du type à condensateur flottant (« Flying Capacitor » en anglais).

### Technique antérieure

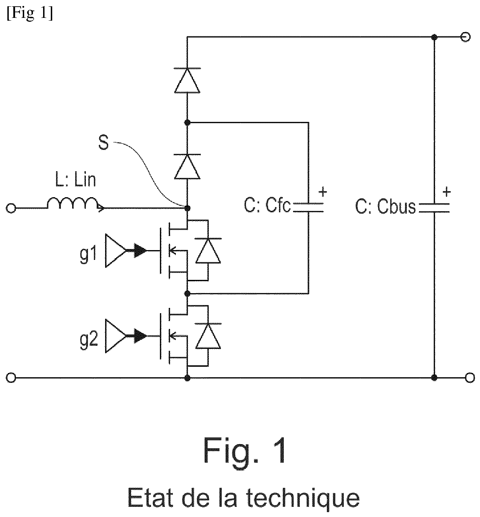

La topologie dite « Flying Capacitor » est une structure de convertisseur statique de puissance multi-niveaux. Sa version à trois niveaux est représentée sur la figure 1, avec une approche de type Boost unidirectionnel.

La demande WO 2011/103058 concerne un régulateur de courant continu à double sortie, comportant un condensateur flottant.

La topologie « Flying Capacitor » repose sur l'établissement d'une tension aux bornes d'un ou de plusieurs condensateur(s) interne(s) au circuit, tension qui intervient ensuite au sein des états de commutation du circuit, afin de créer des sous-niveaux de tension. Par exemple, la structure illustrée sur la figure 1 à 3 niveaux équirépartis (et donc 4 interrupteurs + 1 condensateur flottant Cfc + 1 inductance Lin connectée à un point milieu central S + 1 condensateur de bus Cbus) possède 4 états de commutation possibles, avec des tensions au point S listées dans le tableau 1 ci-dessous. Certains états rechargeant le condensateur Cfc et d'autres le déchargeant, le principe de la commande de cette topologie est de répartir la période de commutation en différentes fractions de temps passées dans chaque état nécessaire, afin à la fois de réguler la tension de condensateur flottant Cfc et le courant dans l'inductance Lin reliée au point S.

**[Tableau 1]**

| **Commande g1** | **Commande g2** | **Tension au point central S** | **Tension au point central S si V_Cfc = V_Cbus / 2** | **Comportement du condensateur Cfc** |
|---|---|---|---|---|
| OFF | OFF | V_Cbus | V_Cbus | Repos |
| ON | OFF | V_Cbus - V_Cfc | V_Cbus / 2 | Décharge |
| OFF | ON | V_Cfc | V_Cbus / 2 | Recharge |
| ON | ON | 0 | 0 | Repos |

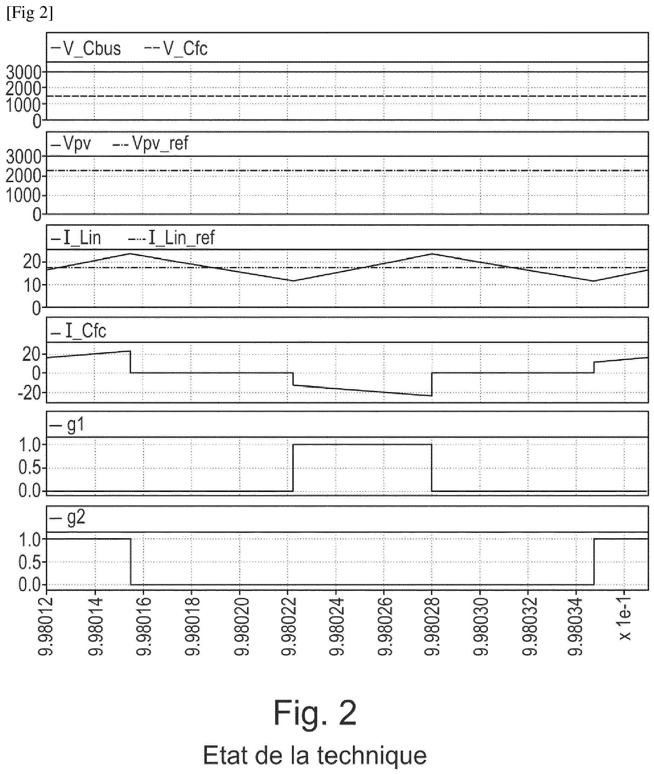

La figure 2 représente les formes d'onde des signaux pour le circuit de la figure 1, pour une période de commutation, avec une commande usuelle appliquée à cette topologie, la source à l'entrée du convertisseur étant par exemple une source photovoltaïque (PV) régulée à son point maximal de puissance (MPP), la tension photovoltaïque Vpv étant située entre V_Cfc et V_Cbus pour le cas usuel à 3 niveaux.

Usuellement, lorsque deux ou plus de deux sources ou charges reliées au convertisseur ont des tensions (ou des courants) légèrement différents, on constate que deux approches sont mises en oeuvre dans l'art antérieur, ces approches étant parfois combinées.

La première approche est celle dite de « négligence des écarts ». Elle a pour principe que les sources ou charges sont mises en parallèle sans égard pour leurs différences de caractéristiques. Selon cette approche et dans un onduleur PV avec suivi de point maximal de puissance (MPPT), des chaînes PV sont placées en parallèle et on les utilise comme une seule chaîne à courant supérieur. Cette chaîne équivalente a des performances inférieures à la somme de toutes les chaînes constituantes, et elle est bridée par la plus faible des chaînes constituantes. Dans certains cas, une différence de tension importante peut être présente entre les chaînes constituantes, et un courant circule donc de l'une à l'autre, ce qui n'est pas souhaitable. Parmi les autres inconvénients de cette approche, on peut citer une perte de production par la sous-exploitation des chaînes, une nécessité de mettre en place des mesures de sécurité supplémentaires, comme les fusibles dès 3 chaînes, afin de limiter le courant inverse (d'une chaîne à l'autre) à celui de la chaîne elle-même (avec des coûts et pertes supplémentaires).

La deuxième approche est celle dite de « multiplication des convertisseurs complets ». Selon cette approche et dans un onduleur PV avec MPPT, on associe chaque chaîne PV à un convertisseur réalisant son MPPT, les sorties de ces convertisseurs DC/DC étant ensuite à nouveau associées à des onduleurs séparés, ou regroupées vers un onduleur unique. C'est le cas des convertisseurs dits « multi-MPPT », qui intègrent dans une seule enceinte plusieurs convertisseurs Boost MPPT indépendants, et un onduleur. La productibilité PV est alors exploitée au maximum, chaque chaîne étant à son MPP. Parmi les inconvénients de cette approche, on peut citer un investissement important, avec une multiplication des convertisseurs indépendants. Un autre inconvénient est une indépendance complète superflue, entre des éléments qui sans être identiques, sont pourtant souvent très semblables. Et en termes de complexité, par rapport à la première approche, il y a une augmentation du taux de défaillance des éléments auxiliaires et de contrôle commande.

### Exposé de l'invention

Il existe donc un besoin pour remédier aux défauts des topologies de convertisseurs de l'art antérieur, notamment en présence de plusieurs sources ou charges différentes ou susceptibles de générer ou d'absorber des courants différents à un même instant.

### Circuit de convertisseur

L'invention vise à répondre à cet objectif et a pour objet, selon l'un de ses aspects, un circuit de convertisseur de puissance multiports et multi-niveaux du type à condensateur flottant, comportant :
- au moins deux lignes de bus externe ;
- au moins un condensateur de bus relié auxdites lignes ;
- M cellule(s) de commutation centrale(s) comportant chacune au moins une branche, au moins une cellule de commutation centrale comportant au moins deux branches reliées en parallèle, chaque branche comportant au moins deux interrupteurs haut et bas dont l'un au moins est commandable, ces deux interrupteurs étant reliés par un point milieu à un port respectif du convertisseur ;
- un étage haut comportant un ou plusieurs interrupteurs reliant la ou les cellules de commutation à l'une des lignes du bus ;
- un étage bas comportant un ou plusieurs interrupteurs reliant la ou les cellules de commutation à l'autre des lignes de bus, le ou les interrupteurs de l'un au moins des étages haut et bas étant commandable(s), chaque étage haut ou bas définissant avec la ou les cellules de commutation centrales N niveaux d'interrupteurs entre la ligne de bus respective et le port associé du convertisseur, chaque cellule de commutation étant reliée à des interrupteurs respectifs de même niveau des étages haut et bas ;
- des condensateurs flottants, reliés chacun à des noeuds entre interrupteurs des étages haut et bas d'un même niveau respectif compté à partir de la ligne de bus correspondante, dont un condensateur flottant par cellule centrale ou par branche de cellule centrale, connecté aux noeuds des interrupteurs haut et bas de la cellule opposés au point milieu.

L'invention fournit une nouvelle topologie de circuit de convertisseur de puissance, pouvant être appelée « Multi-Port Flying Capacitor » (MPFC), vu la présence d'une pluralité de ports.

L'architecture MPFC selon l'invention possède plusieurs ports quasi-indépendants en comparaison avec celle d'un convertisseur « Flying Capacitor » classique tel que décrit précédemment. Cette quasi-indépendance vient du fait qu'une partie seulement des interrupteurs statiques de la topologie sont multipliés (ceux des M cellules centrales). L'invention permet d'obtenir une topologie de convertisseur plus optimale et moins complexe que les topologies existantes dans le cadre des systèmes possédant plusieurs sources ou charges.

L'architecture MPFC selon l'invention a l'avantage d'être facilement modulable, pouvant comporter un grand nombre de variantes, avec un grand nombre de choix de nombre de cellules M, et un grand nombre de choix de nombre de ports.

Un interrupteur commandable dans le circuit de convertisseur selon l'invention est de type générique, pouvant être un transistor, par exemple MOSFET, notamment en Si (silicium) ou SiC (carbure de silicium), IGBT notamment en Si, MODFET (ou transistor à effet de champ à dopage modulé qui est un type de transistor à effet de champ connu aussi sous le nom de transistor à électron à haute mobilité HEMT), en particulier un HEMT au GaN (nitrure de gallium), un thyristor, etc.

Un interrupteur non commandable dans le circuit de convertisseur selon l'invention peut être une diode en sa qualité de dipôle passif asymétrique ne laissant passer le courant que dans le sens direct.

De préférence, les interrupteurs non commandables sont des diodes et les interrupteurs commandables sont des transistors, notamment de type MOSFET.

Chaque interrupteur, commandable ou non, peut être réalisé par l'association en parallèle de plusieurs interrupteurs. De préférence, l'association concerne des interrupteurs identiques, et/ou l'association de transistors avec des diodes montées en roue libre (parfois appelé montage en « antiparallèle »).

Le circuit de convertisseur selon l'invention peut ainsi comporter différents types et différentes technologies d'interrupteurs, au choix ou conjointement.

Dans un mode de réalisation, le circuit de convertisseur selon l'invention est de type « buck » unidirectionnel (l'énergie transitant du bus vers les ports), le ou les interrupteurs de l'étage haut ainsi que l'interrupteur haut de chaque branche de la ou de chaque cellule centrale relié à l'étage haut étant commandables, par exemple constitués de transistors MOSFET, et le ou les interrupteurs de l'étage bas ainsi que l'interrupteur bas de chaque branche de la ou de chaque cellule centrale relié à l'étage bas étant non commandables, par exemple constitués de diodes.

Dans un autre mode de réalisation, le circuit de convertisseur selon l'invention est de type « boost » unidirectionnel (l'énergie transitant des ports vers le bus), le ou les interrupteurs de l'étage haut ainsi que l'interrupteur haut de chaque branche de la ou de chaque cellule centrale relié à l'étage haut étant non commandables, par exemple constitués de diodes, et le ou les interrupteurs de l'étage bas ainsi que l'interrupteur bas de chaque branche de la ou de chaque cellule centrale relié à l'étage bas étant commandables, par exemple constitués de transistors MOSFET.

Dans un autre mode de réalisation, le circuit de convertisseur selon l'invention est de type « bidirectionnel », tous les interrupteurs étant commandables, par exemple constitués de transistors MOSFET. La fonction réalisée par le circuit de convertisseur est alors au choix celle du « boost » ou celle du « buck », selon les commandes appliquées aux interrupteurs. Le circuit de convertisseur selon l'invention peut avoir deux ports, une cellule centrale qui comporte deux branches, l'étage haut comprenant un interrupteur et l'étage bas comprenant un interrupteur.

Le circuit de convertisseur selon l'invention peut avoir quatre ports, une cellule centrale qui comporte quatre branches, l'étage haut comprenant trois niveaux d'interrupteurs, chaque niveau de l'étage haut comportant un interrupteur, l'étage bas comprenant trois niveaux d'interrupteurs, chaque niveau de l'étage bas comportant un interrupteur.

Le circuit de convertisseur selon l'invention peut avoir quatre ports, deux cellules centrales dont chacune comporte deux branches, l'étage haut comprenant trois niveaux d'interrupteurs, le premier niveau de l'étage haut compté à partir des cellules centrales comportant deux interrupteurs dont chacun est relié à une cellule centrale respective, les deuxième et troisième niveaux de l'étage haut comportant chacun un interrupteur, l'étage bas comprenant trois niveaux d'interrupteurs, le premier niveau de l'étage bas compté à partir des cellules centrales comportant deux interrupteurs dont chacun est relié à une cellule centrale respective, les deuxième et troisième niveaux comportant chacun un interrupteur.

Le circuit de convertisseur selon l'invention peut avoir trois ports, deux cellules centrales, l'une à une seule branche et l'autre à deux branches, l'étage haut comprenant trois niveaux d'interrupteurs, le premier niveau de l'étage haut compté à partir des cellules centrales comportant deux interrupteurs dont chacun est relié à une cellule centrale, les deuxième et troisième niveaux de l'étage haut comportant chacun un interrupteur, l'étage bas comprenant trois niveaux d'interrupteurs, le premier niveau de l'étage bas compté à partir des cellules centrales comportant deux interrupteurs dont chacun est relié à une cellule centrale, les deuxième et troisième niveaux comportant chacun un interrupteur.

Le circuit de convertisseur selon l'invention peut avoir deux ports, une cellule centrale qui comporte deux branches, chaque branche comportant quatre interrupteurs, l'étage haut comprenant deux niveaux d'interrupteurs dont chacun comporte un interrupteur, l'étage bas comprenant deux niveaux d'interrupteurs dont chacun comporte un interrupteur.

De préférence, l'interrupteur haut et l'interrupteur bas d'une branche d'une cellule centrale donnée, lorsqu'ils sont tous deux commandables, sont configurés pour être simultanément dans deux états différents, l'un fermé, l'autre ouvert et inversement. Ceci empêche la création d'un court-circuit aux bornes du condensateur connecté en parallèle avec ladite cellule.

Les ports sont préférentiellement alimentés par des charges ou des sources de courant ou de tension ayant des caractéristiques différentes. Par exemple, le courant ou la tension peuvent différer d'une source à l'autre au même instant.

La puissance nominale transférée par le convertisseur est typiquement supérieure à 1 W. La fréquence de commutation est typiquement supérieure à 16 Hz et est de préférence comprise entre 200 Hz et 20 MHz. Le potentiel aux bornes du condensateur de bus peut être supérieur à 40 V.

Le point milieu peut être relié au port correspondant par l'intermédiaire d'une inductance, notamment lorsque ce port est relié à une source telle qu'une chaîne de panneaux photovoltaïques.

Dans un mode de réalisation, le circuit de convertisseur selon l'invention présente une configuration dite « symétrique » avec une ligne de bus commune et des lignes de bus de polarités respectivement positive et négative, avec un premier sous-circuit de convertisseur entre la ligne de bus commune et la ligne de polarité positive et un deuxième sous-circuit de convertisseur entre la ligne de bus commune et la ligne de bus de polarité négative.

La ligne de bus commune est préférentiellement la masse du convertisseur.

Les deux sous-circuits de convertisseur sont préférentiellement identiques.

Chaque sous-circuit de convertisseur peut être identique à l'un des circuits de convertisseurs définis plus haut pour deux lignes de bus.

### Procédé de commande

L'invention a encore pour objet, selon un autre de ses aspects, un procédé de commande du circuit de convertisseur selon l'invention dans sa variante à configuration symétrique à deux sous-circuits, dans lequel les interrupteurs symétriques entre le premier sous-circuit et le deuxième sous-circuit sont commandés simultanément.

Dans le cas du circuit de convertisseur de type « bidirectionnel », les interrupteurs de l'étage haut et les interrupteurs hauts des cellules centrales sont préférentiellement commandables par des signaux complémentaires deux à deux de ceux qui commandent les interrupteurs de l'étage bas et les interrupteurs bas des cellules centrales. Par « *complémentaire d'un signal »,* on entend la forme d'onde en sortie d'un inverseur dont l'entrée reçoit ledit signal, le signal complémentaire ayant de préférence son front montant retardé afin de constituer un « temps mort » entre deux interrupteurs d'une même cellule de commutation, commandés de manière complémentaire.

Le circuit de convertisseur peut se présenter sous la forme d'au moins une carte électronique avec des composants discrets montés dessus, les diodes et/ou transistors pouvant être des composants individuels ou être regroupés au moins pour certains d'entre eux dans des composants plus complexes.

### Convertisseur de puissance

L'invention a également pour objet, selon un autre de ses aspects, un convertisseur de puissance comportant un circuit de convertisseur selon l'invention et son circuit de pilotage. Ce circuit de pilotage génère les signaux de commande des interrupteurs commandables de manière à assurer la fonction de conversion recherchée.

### Installation

L'invention a aussi pour objet, selon un autre de ses aspects, une installation comportant un convertisseur selon l'invention et une pluralité de sources dont chacune est reliée à un port respectif du circuit de convertisseur, le cas échéant via une inductance, comme mentionné plus haut.

Les sources peuvent être des chaînes de panneaux photovoltaïques.

### Brève description des dessins

L'invention pourra être mieux comprise à la lecture de la description détaillée qui va suivre, d'exemples non limitatifs de mise en oeuvre de celle-ci, et à l'examen du dessin annexé, sur lequel :
[Fig 1] La figure 1, décrite plus haut, représente schématiquement un exemple de convertisseur « Flying Capacitor » selon l'état de la technique ;
[Fig 2] la figure 2, décrite plus haut, illustre un extrait des formes d'onde des signaux du convertisseur de la figure 1 ;
[Fig 3] la figure 3 représente schématiquement un premier exemple de circuit de convertisseur selon l'invention ;
[Fig 4] la figure 4 illustre un extrait des formes d'onde des signaux dans le circuit de la figure 3 ;
[Fig 5] la figure 5 illustre schématiquement un exemple de diagramme de contrôle-commande pouvant être appliqué au circuit de la figure 3 ;
[Fig 6] la figure 6 représente schématiquement un deuxième exemple de circuit de convertisseur selon l'invention ;
[Fig 7] la figure 7 illustre un extrait des formes d'onde des signaux dans le circuit de la figure 6 ;
[Fig 8] la figure 8 représente schématiquement un troisième exemple de circuit de convertisseur selon l'invention ;
[Fig 9] la figure 9 illustre un extrait des formes d'onde des signaux dans le circuit de la figure 8 ;
[Fig 10] la figure 10 représente schématiquement un quatrième exemple de circuit de convertisseur selon l'invention ;
[Fig 11] la figure 11 illustre schématiquement un cinquième exemple de circuit de convertisseur selon l'invention ;
[Fig 12] la figure 12 représente schématiquement un sixième exemple de circuit de convertisseur selon l'invention ; et
[Fig 13] la figure 13 illustre schématiquement un septième exemple de circuit de convertisseur selon l'invention.

### Description détaillée

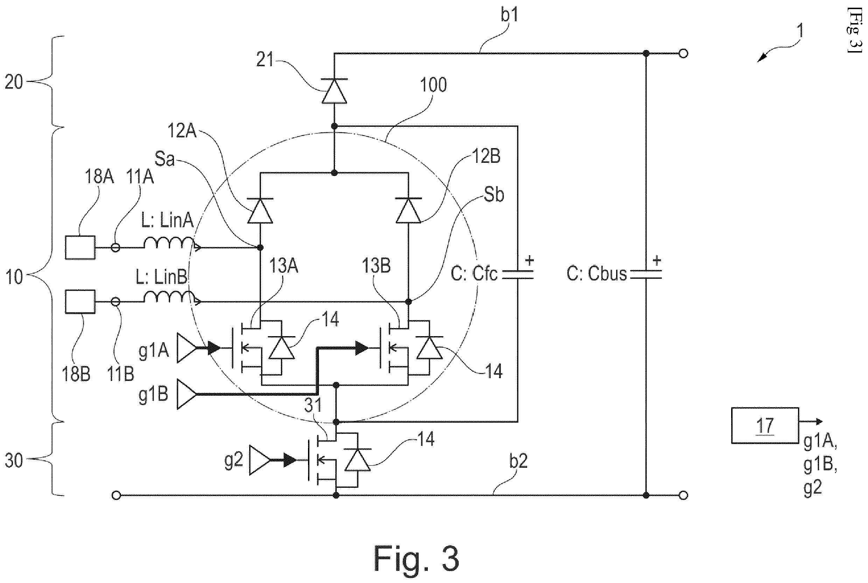

On a illustré schématiquement à la figure 3 un premier exemple de circuit de convertisseur 1 selon l'invention à deux ports 11A et 11B. Ces ports peuvent être alimentés par des sources 18A, 18B, notamment des chaînes PV.

Le circuit de convertisseur 1 comporte deux lignes de bus externe b1, b2, un étage haut 20, un étage bas 30, un étage intermédiaire 10, un condensateur flottant Cfc monté en parallèle avec l'étage intermédiaire et un condensateur de bus Cbus relié aux lignes b1, b2.

L'étage haut 20 comporte un seul interrupteur 21 constitué d'une diode.

L'étage bas 30 comporte également un seul interrupteur 31 constitué d'un transistor MOSFET, commandé par un signal g2 appliqué sur sa grille, et monté en parallèle avec une diode de roue libre 14. Alternativement, la diode 14 est intrinsèque au transistor.

L'étage intermédiaire 10 comprend une cellule centrale 100 connectée en haut à l'étage haut 20 et en bas à l'étage bas 30. Cette cellule comprend deux branches connectées entre elles en parallèle. Chaque branche est associée à un port respectif 11A, 11B et comporte un interrupteur haut 12A, 12B et un interrupteur bas 13A, 13B reliés entre eux par un point milieu Sa, Sb au port respectif 11A, 11B. Dans cet exemple, l'interrupteur haut 12A, 12B est une diode et l'interrupteur bas 13A, 13B est un transistor MOSFET qui est commandé par un signal g1A, g1B appliqué sur sa grille, et qui est monté en parallèle avec une diode de roue libre 14. Le point milieu Sa ou Sb est relié au port correspondant 11A ou 11B par l'intermédiaire d'une inductance LinA ou LinB.

Un circuit de pilotage 17 du circuit de convertisseur 1, dit aussi circuit de contrôle commande, est configuré pour générer les signaux de commande des interrupteurs commandables, en l'occurrence g1A, g1B, g2. A des fins de simplification, le bloc correspondant au circuit 17 est représenté sur les exemples suivants sans la flèche de sortie pour les signaux de commande.

Dans cet exemple, l'étage haut 20 ou bas 30 définit avec la cellule de commutation centrale 100 deux niveaux d'interrupteurs entre la ligne de bus respective et le port associé du convertisseur (N=2).

Dans cet exemple, le circuit de convertisseur 1 est de type « boost » unidirectionnel dans lequel l'interrupteur 21 de l'étage haut ainsi que celui 12A, 12B de chaque branche de la cellule centrale 100 relié à l'étage haut sont des diodes et l'interrupteur 31 de l'étage bas ainsi que celui 13A, 13B de chaque branche de la cellule centrale 100 relié à l'étage bas sont des transistors MOSFET.

Sur cette figure et dans d'autres exemples qui suivront plus loin, la moitié des interrupteurs du circuit sont des diodes (donc non commandables). Cela permet de simplifier la topologie et sa commande lorsque la structure est unidirectionnelle, mais une telle structure fonctionne également en « redressement synchrone », en remplaçant les diodes par des transistors MOSFET commandés adéquatement avec un temps mort.

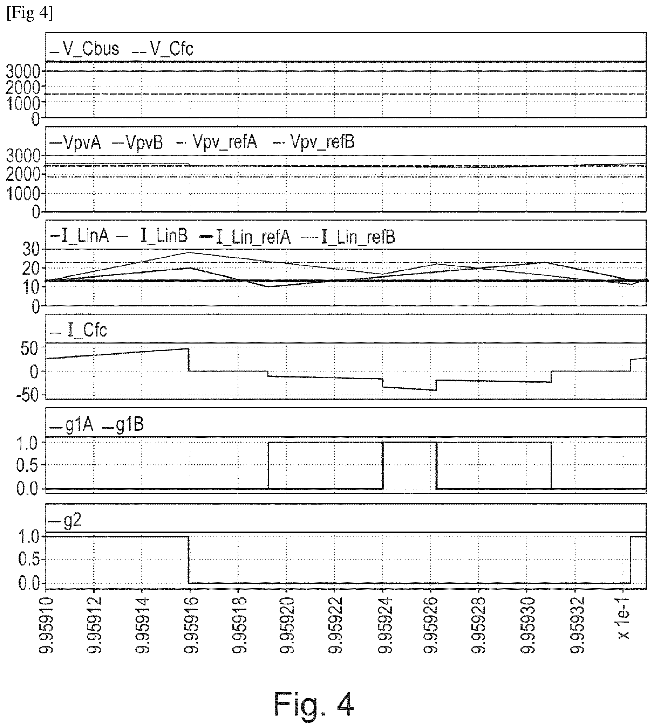

La figure 4 représente une commande possible (g1A, g1B, g2), pour une période de commutation, dans le cadre de la topologie du circuit proposée en figure 3, ainsi que les valeurs électriques résultantes dans une application à deux chaînes PV « 3000V » de caractéristiques différentes.

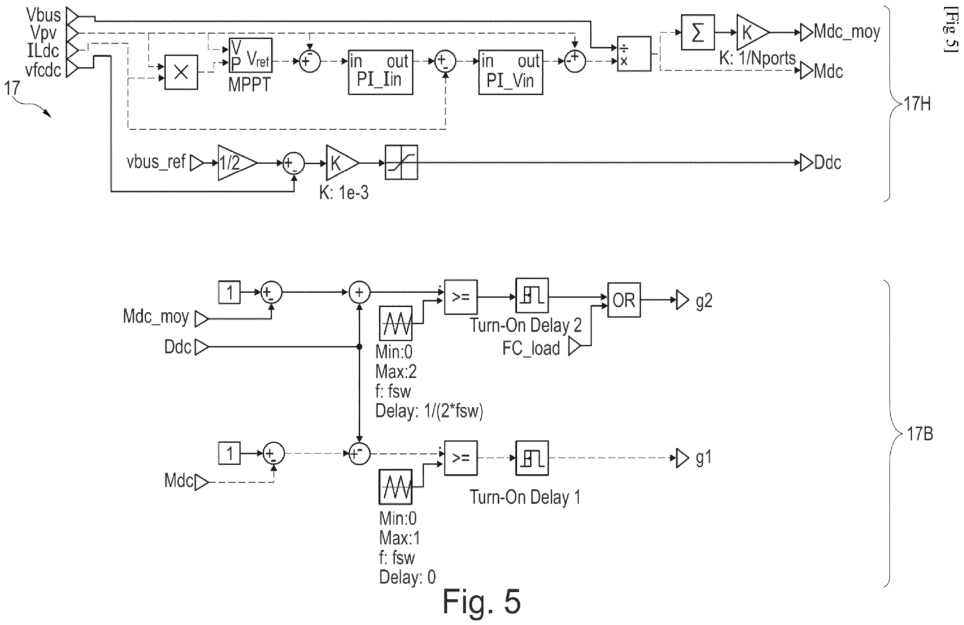

La figure 5 représente un exemple simple de diagramme de contrôle-commande pour le circuit de pilotage 17 permettant de générer les signaux de commande pour un MPFC tel que celui de la figure 3. Les traits en pointillés signifient qu'ils représentent plusieurs signaux : g1A et g1B par exemple.

En haut de la figure 5 (schéma 17H), on représente le diagramme schématique d'un exemple de contrôle-commande pour générer, à partir des mesures de la tension de bus DC (Vbus), de chaque tension PV (Vpv), de chaque courant d'entrée du MPFC (ILdc) et de la tension de condensateur interne Cfc (Vfcdc), le rapport cyclique (Ddc) à appliquer aux interrupteurs externes 21, 31 et les rapports cycliques (Mdc représentant Mdc1, Mdc2 dans le cas à deux ports) à appliquer à la cellule centrale et un rapport cyclique central moyen (Mdc_moy). En bas de la figure 5 (schéma 17B), on représente le diagramme schématique de contrôle-commande pour générer, à partir de ces rapports cycliques, les commandes g1 et g2 allant vers les interrupteurs du bas.

La commande peut être réalisée de manière numérique ou de manière analogique (chaque bloc ayant son équivalent analogique), ou par un assemblage d'analogique et de numérique (limitant par exemple l'analogique à la génération des différents signaux g1 de commande des interrupteurs bas des branches à partir d'un signal g1 moyen et des différents courants d'entrée).

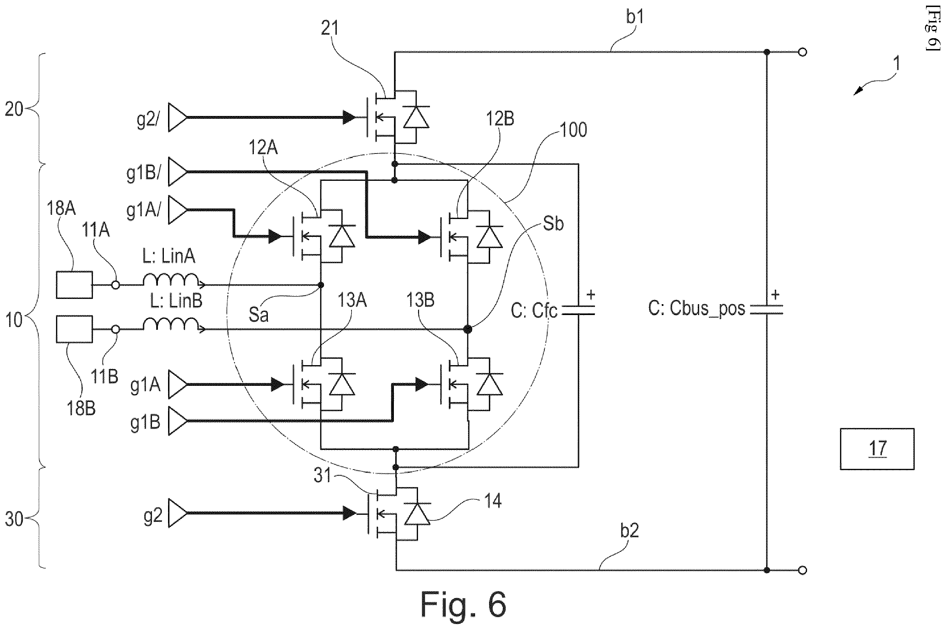

La figure 6 représente schématiquement un deuxième exemple de circuit de convertisseur 1 selon l'invention, analogue au premier exemple mais étant de type « bidirectionnel », où tous les interrupteurs sont commandables, et sont constituées par exemple de transistors MOSFET. Il est à noter que les interrupteurs 21, 12A, 12B sont commandés par des signaux g2/, g1A/, g1B/, complémentaires (de préférence avec « temps mort ») de ceux g2, g1A, g1B commandant les interrupteurs 31, 13A, 13B.

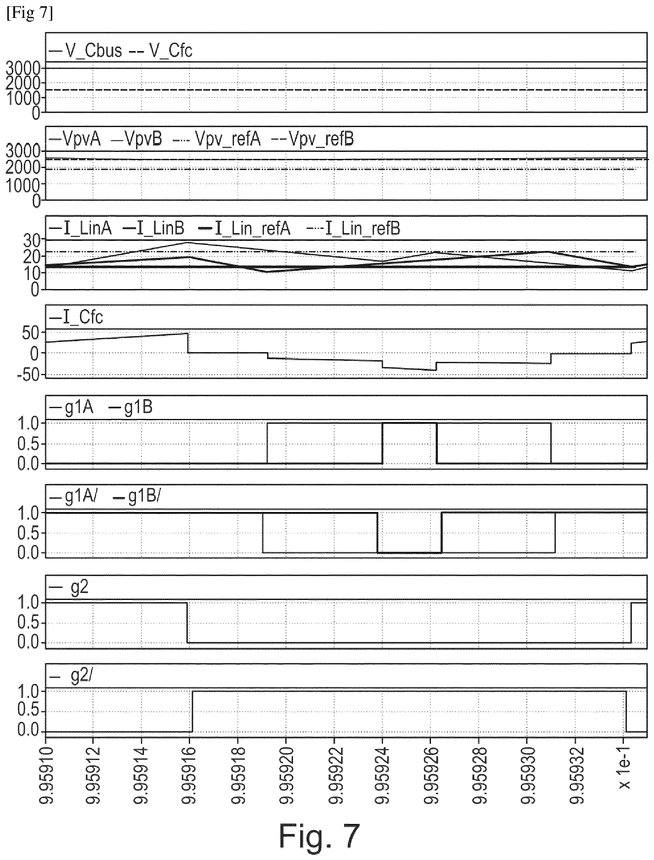

La figure 7 représente une commande possible (g1A, g1B, g2 et leurs complémentaires g1A/, g1B/, g2/), pour une période de commutation, dans le cadre de la topologie proposée en figure 6, ainsi que les valeurs électriques résultantes dans une application à 2 chaînes PV « 3000V » de caractéristiques différentes.

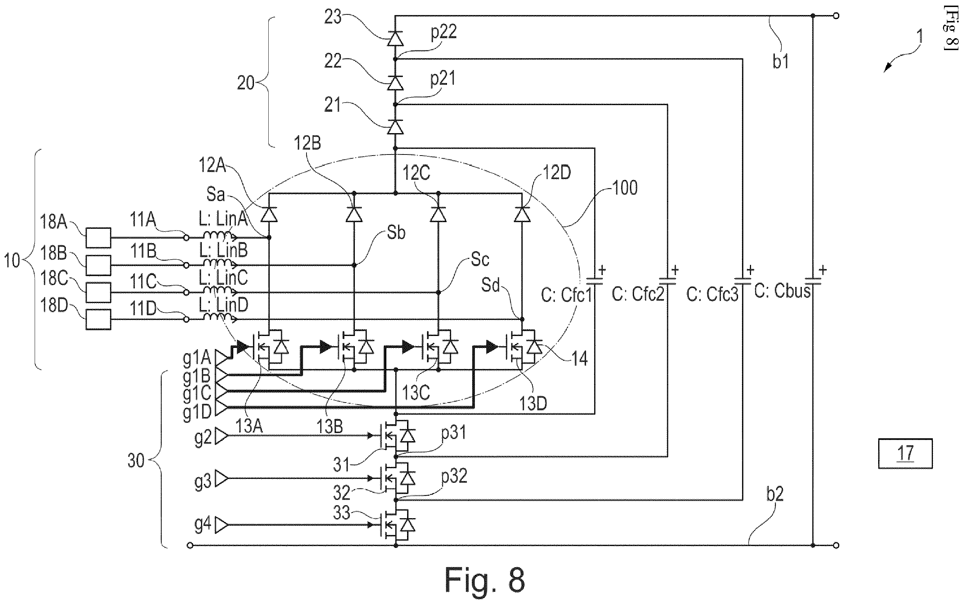

La figure 8 représente schématiquement un troisième exemple de circuit de convertisseur 1 selon l'invention. Cet exemple est similaire à celui de la figure 3, également de type « boost » unidirectionnel, mais ayant 4 ports 11A, 11B, 11C, 11D.

La cellule centrale 100 comporte ainsi 4 branches parallèles reliées à ces ports en des points milieux Sa, Sb, Sc et Sd respectifs par l'intermédiaire d'inductances LinA, LinB, LinC, LinD respectives.

Chacun des étages haut 20 et bas 30 comporte 3 niveaux d'interrupteurs avec un interrupteur par niveau. Les interrupteurs de niveaux différents sont reliés entre eux en des noeuds inter-niveaux : p21 entre les premier et deuxième niveaux hauts (comptés à partir de la cellule centrale 100), p22 entre les deuxième et troisième niveaux hauts, p31 entre les premier et deuxième niveaux bas et p32 entre les deuxième et troisième niveaux bas.

Chaque étage haut ou bas définit avec la cellule de commutation centrale N=4 niveaux d'interrupteurs entre la ligne de bus respective et le port associé du convertisseur, la cellule de commutation 100 étant reliée aux interrupteurs respectifs du premier niveau des étages haut et bas compté à partir de la cellule centrale 100.

Le circuit comporte également trois condensateurs flottants Cfc1, Cfc2, Cfc3 et un condensateur de bus Cbus relié aux lignes de bus externe b1, b2.

Le condensateur flottant Cfc1 associé à la cellule centrale 100 est connecté en parallèle avec cette dernière.

Le condensateur flottant Cfc2 est connecté de sorte que ses bornes sont reliées aux noeuds inter-niveaux p21 et p31.

Le condensateur flottant Cfc3 est connecté de sorte que ses bornes sont reliées aux noeuds inter-niveaux p22 et p32.

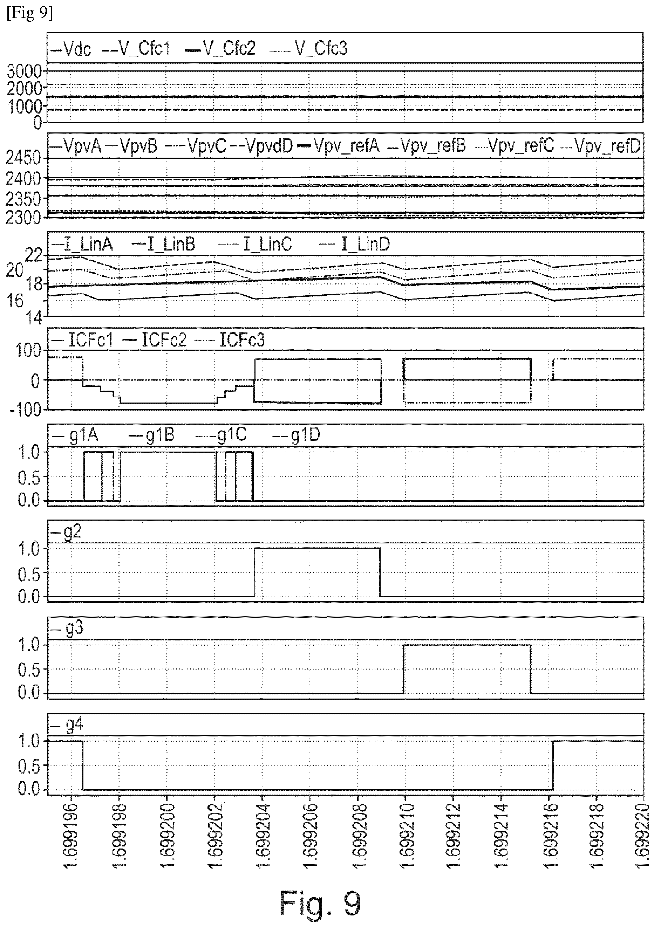

La figure 9 représente une commande possible (g1A, g1B, g1C, g1D, g2, g3, g4), pour une période de commutation, dans le cadre de la topologie proposée en figure 8, ainsi que les valeurs électriques résultantes, dans une application à 4 chaînes PV « 3000V » de caractéristiques différentes.

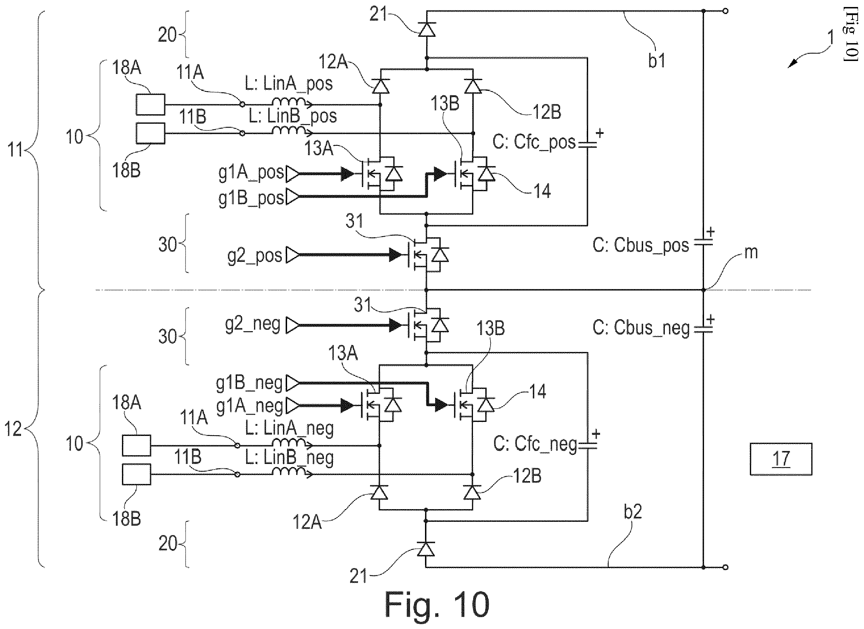

La figure 10 représente schématiquement un quatrième exemple de convertisseur 1 selon l'invention. Dans cet exemple, le circuit convertisseur est répliqué par rapport à la masse m, i.e. il présente une configuration dite « symétrique » avec une ligne de bus commune m et des lignes de bus de polarités respectivement positive et négative, avec un premier sous-circuit de convertisseur 11 entre la ligne de bus commune m et la ligne de polarité positive b1 et un deuxième sous-circuit de convertisseur 12 entre la ligne de bus commune m et la ligne de bus de polarité négative b2.

Le premier sous-circuit 11 correspond dans cet exemple au circuit du convertisseur « boost » unidirectionnel représenté en figure 3, et le deuxième sous-circuit 12 correspond dans cet exemple à sa réplique de type « boost négatif » unidirectionnel.

Les interrupteurs symétriques entre le premier sous-circuit et le deuxième sous-circuit sont de préférence commandés simultanément. En particulier, lorsque les tensions respectives des deux condensateurs de bus sont fixées par un autre convertisseur, cette régulation n'est pas nécessaire dans le convertisseur 1 afin de maintenir lesdites tensions, et on peut utiliser des signaux de commande égaux deux à deux entre partie haute et partie basse du convertisseur symétrique.

Dans le cas général, une commande différente peut être appliquée aux interrupteurs du premier sous-circuit et aux interrupteurs du deuxième sous-circuit, permettant de réguler l'équilibre des tensions entre les deux condensateurs de bus Cbus_pos et Cbus_neg. Par exemple, on peut exploiter un même circuit de contrôle, mais prenant en entrée une tension de bus mesurée différente (soit celle de Cbus_pos, soit celle de Cbus_neg), ce qui permet d'obtenir des ordres différents.

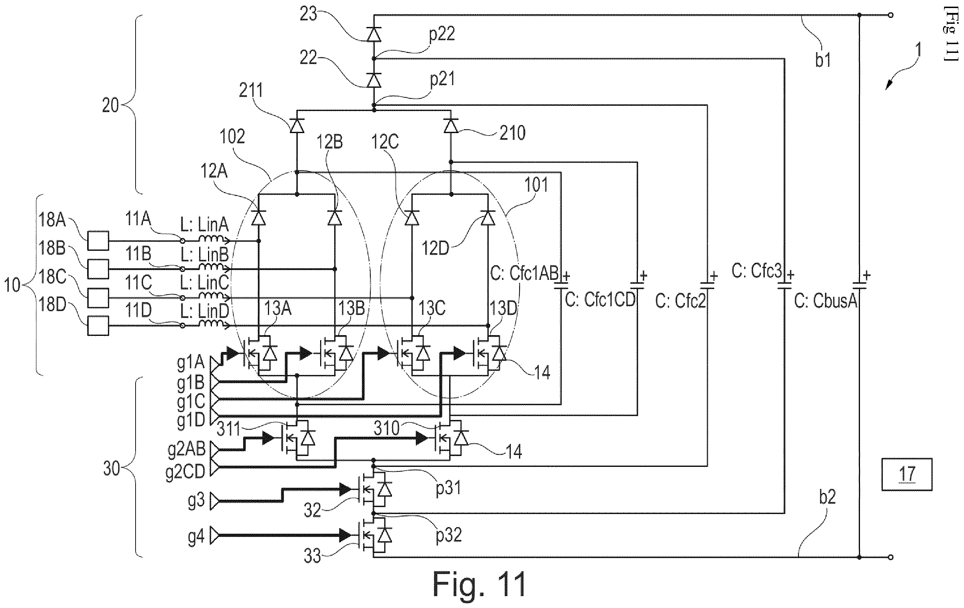

La figure 11 illustre schématiquement un cinquième exemple de convertisseur 1 selon l'invention, de type « boost » unidirectionnel où les interrupteurs de l'étage haut et les interrupteurs hauts des cellules centrales sont des diodes, et les interrupteurs de l'étage bas et les interrupteurs bas des cellules centrales sont des transistors MOSFET.

Ce circuit est similaire à celui de la figure 8 comportant 4 ports 11A, 11B, 11C, 11D, mais comprend deux cellules centrales 101 et 102. Chacune de ces cellules comprend deux branches reliées en haut et en bas à l'étage haut 20 et à l'étage bas 30, respectivement. La cellule 101 est reliée à l'interrupteur 210 du premier niveau d'interrupteurs de l'étage haut (compté à partir des cellules centrales 101, 102) et à l'interrupteur 310 du premier niveau d'interrupteurs de l'étage bas. La cellule 102 est reliée à l'interrupteur 211 du premier niveau d'interrupteurs de l'étage haut et à l'interrupteur 311 du premier niveau d'interrupteurs de l'étage bas. Le premier niveau d'interrupteurs, aussi bien à l'étage haut 20 qu'à l'étage bas 30, comporte 2 interrupteurs. Les deuxième et troisième niveaux d'interrupteurs comportent chacun un interrupteur.

Les interrupteurs de niveaux différents sont reliés entre eux en des noeuds inter-niveaux : p21 entre les premier et deuxième niveaux hauts, p22 entre les deuxième et troisième niveaux hauts, p31 entre les premier et deuxième niveaux bas et p32 entre les deuxième et troisième niveaux bas.

Ainsi, comme dans l'exemple de la figure 8, il existe dans l'exemple de la figure 10 trois niveaux d'interrupteurs externes aux cellules centrales 101, 102.

Le circuit comporte également quatre condensateurs flottants Cfc1AB, Cfc1CD, Cfc2, Cfc3 et un condensateur de bus CbusA relié aux lignes de bus externe b1, b2.

Le condensateur flottant CfclAB associé à la cellule centrale 101 est connecté en parallèle avec cette dernière.

Le condensateur CfclCD associé à la cellule centrale 102 est connecté en parallèle avec cette dernière.

Le condensateur Cfc2 est connecté de sorte que ses bornes sont reliées aux noeuds inter-niveaux p21 et p31.

Le condensateur Cfc3 est connecté de sorte que ses bornes de ce condensateur est connecté aux noeuds inter-niveaux p22 et p32.

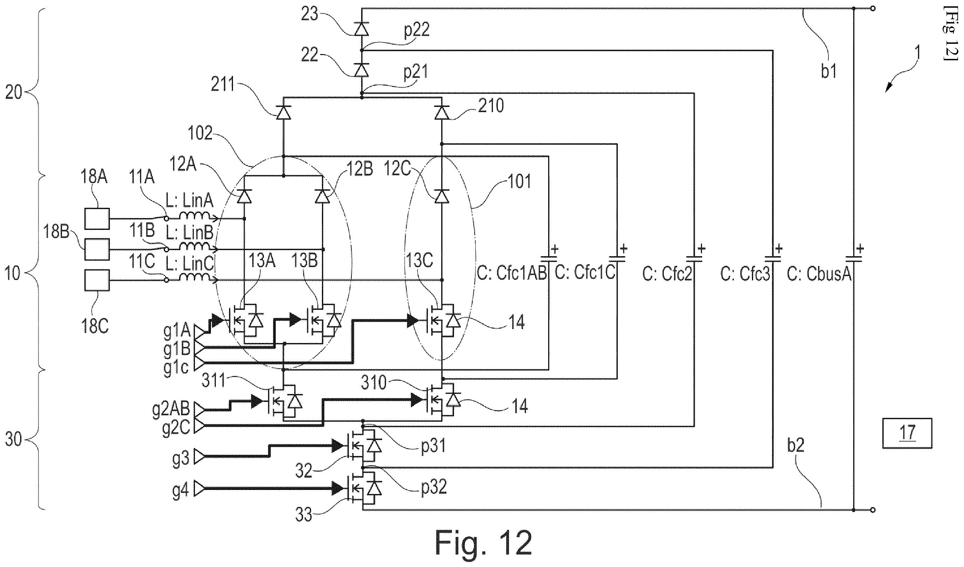

La figure 12 représente schématiquement un sixième exemple de convertisseur 1 selon l'invention, identique à celui de la figure 11 à la différence près que la cellule centrale 101 ne comporte qu'une seule branche reliée au port 11C. Ainsi, ce convertisseur ne possède que 3 ports : 11A, 11B et 11C.

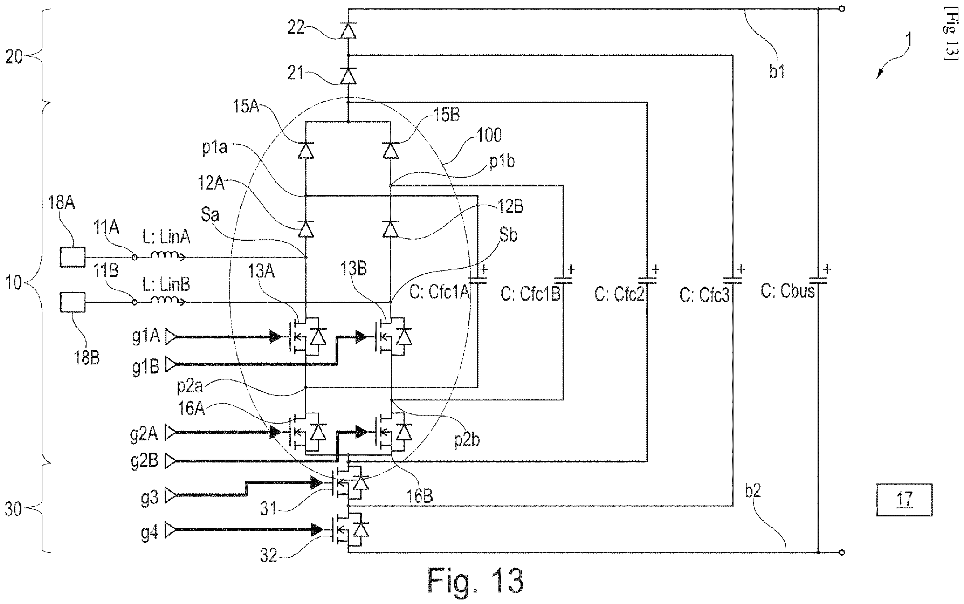

La figure 13 illustre schématiquement un septième exemple de convertisseur 1 selon l'invention, de type « boost » unidirectionnel, à deux ports 11A, 11B.

L'étage intermédiaire 10 comporte une seule cellule centrale 100 à deux branches dont chacune est reliée au port correspondant.

Chaque branche de la cellule 100 comprend 4 interrupteurs et est associée à un condensateur flottant respectif Cfc1A, Cfc1B. La branche reliée au port 11A comporte deux diodes 12A, 15A et deux MOSFET 13A, 16A. La branche reliée au port 11B comporte également deux diodes 12B, 15B et deux MOSFET 13B, 16B. Dans chacune des branches, les diodes sont connectées aux MOSFET en un point milieu respectif Sa, Sb. La diode 12A et le MOSFET 13A forment les interrupteurs haut et bas de la branche A. La diode 12B et le MOSFET 13B forment les interrupteurs haut et bas de la branche B.

Le condensateur flottant CfclA est connecté aux noeuds pla, p2a des interrupteurs haut 12A et bas 13A de la branche A opposés au point milieu Sa.

Le condensateur flottant CfcB est connecté aux noeuds plb, p2b des interrupteurs haut 12B et bas 13B de la branche B opposés au point milieu Sb.

Chacun des étages haut 20 et bas comporte 2 niveaux d'interrupteurs avec un interrupteur par niveau.

Un convertisseur selon l'invention peut être utilisé dans plusieurs applications, par exemple :
- Une centrale photovoltaïque, où chaque chaîne PV (ou plusieurs chaînes, ou un seul panneau) est connectée sur un port du convertisseur MPFC. Le convertisseur MPFC peut alors réaliser le suivi de point maximal de puissance de chaque partie de la centrale PV malgré les différences d'orientation, d'ombrage, d'usure, ou de technologie entre les sous-ensembles PV ;
- Un parc d'électrolyseurs, où chacun est connecté sur un port du convertisseur MPFC. Le convertisseur MPFC peut alors imposer un point de fonctionnement différent sur chaque électrolyseur, et ainsi placer chacun au point de rendement maximal en s'adaptant à des différences d'usure, de température ou de pression ;
- Une batterie d'accumulateurs électriques constituée de plusieurs sous-modules normalement en parallèle (stockage stationnaire ou domaine automobile), où chacun est connecté sur un port du convertisseur MPFC. Ce dernier peut alors imposer une charge (ou décharge) différente sur chaque module, et ainsi réaliser un équilibrage, s'adapter à des différences de SOC, de SOH, ou de température ;
- Un convertisseur DC/AC devant entraîner deux moteurs à une même fréquence (moteurs asynchrones à vitesses différentes, ou moteurs synchrones nécessairement à même vitesse), mais avec des courants différents, où chaque phase électrique serait fournie par un convertisseur MPFC à deux ports, dédiés respectivement aux deux moteurs.

En ce qui concerne l'application relative à la centrale photovoltaïque, on peut citer à titre d'exemple une centrale photovoltaïque ayant connu une extension, avec de nouvelles chaînes PV, différentes des précédentes (au moins par vieillissement des anciennes chaînes, voire par changement technologique pour suivre les disponibilités du marché).

Pour l'exemple, le convertisseur MPFC a une topologie « Flying Capacitor Boost », avec l'injection depuis la centrale PV vers un réseau électrique intelligent (« smart grid ») DC. Dans ce cadre, il est possible de raccorder chaque type de chaîne sur un port d'entrée d'un convertisseur MPFC. Une telle implémentation nécessite un seul convertisseur de puissance selon l'invention et est en mesure de suivre le MPPT de chaque ensemble de chaînes. Cela permet d'éviter :
- la mise en parallèle de l'ensemble des chaînes sur un seul convertisseur à un seul port où les courbes courant/tension des chaînes ne sont pas en accord, et où le MPPT global est nettement inférieur à la somme des MPPT de chaque chaîne, avec sur certains points une réinjection de certaines chaînes dans les autres, et l'usage de fusibles rendu nécessaire pour plus de 2 chaînes, ou
- le raccord de chaque type de chaîne sur un convertisseur à un seul port d'entrée, commercialement disponible, avec au moins deux convertisseurs complets (commercialement, ceux-ci sont parfois présentés dans une seule enveloppe).

L'invention n'est pas limitée aux exemples de réalisation décrits ci-dessus. Par exemple, on peut prévoir un plus grand nombre de ports.

## Revendications

1. Circuit de convertisseur de puissance multiport et multi-niveau (1) du type à condensateur flottant, comportant :
- au moins deux lignes de bus externe (b1, b2) ;
- au moins un condensateur de bus (Cbus ; CbusA) relié auxdites lignes ;
- M cellule(s) de commutation centrale(s) (100, 101, 102) comportant chacune au moins une branche, au moins une cellule de commutation centrale (100, 101, 102) comportant au moins deux branches reliées en parallèle, chaque branche comportant au moins deux interrupteurs haut et bas (12A, 13A ; 12B, 13B ; 12C, 13C ; 12D, 13D) dont l'un au moins est commandable, ces deux interrupteurs étant reliés par un point milieu (Sa, Sb, Sc, Sd) à un port respectif (11A, 11B, 11C, 11D) du convertisseur ;
- un étage haut (20) comportant un ou plusieurs interrupteurs (21, 22, 23, 210, 211) reliant la ou les cellules de commutation (100, 101, 102) à l'une des lignes du bus (b1, b2) ;
- un étage bas (30) comportant un ou plusieurs interrupteurs (31, 32, 33, 310, 311) reliant la ou les cellules de commutation (100, 101, 102) à l'autre des lignes de bus (b1, b2), le ou les interrupteurs de l'un au moins des étages haut et bas étant commandable(s), chaque étage haut ou bas définissant avec la ou les cellules de commutation centrales N niveaux d'interrupteurs entre la ligne de bus respective et le port associé du convertisseur, chaque cellule de commutation (100, 101, 102) étant reliée à des interrupteurs respectifs de même niveau des étages haut et bas ;
- des condensateurs flottants (Cfc1AB, Cfc1CD, Cfc1, Cfc2, Cfc3), reliés chacun à des noeuds (p21, p22, p31, p32) entre interrupteurs des étages haut et bas d'un même niveau respectif compté à partir de la ligne de bus correspondante, dont un condensateur flottant par cellule centrale ou par branche de cellule centrale (100), connecté aux noeuds (pla, p2a ; plb, p2b) des interrupteurs haut et bas (12A, 13A ; 12B, 13B) de la cellule opposés au point milieu (Sa ; Sb),
le circuit ayant quatre ports (11A, 11B, 11C, 11D), deux cellules centrales (101, 102) dont chacune comporte deux branches, l'étage haut (20) comprenant trois niveaux d'interrupteurs (210, 211, 22, 23), le premier niveau de l'étage haut compté à partir des cellules centrales comportant deux interrupteurs (210, 211) dont chacun est relié à une cellule centrale (101, 102), les deuxième et troisième niveaux de l'étage haut comportant chacun un interrupteur (22 ; 23), l'étage bas (30) comprenant trois niveaux d'interrupteurs (310, 311, 32, 33), le premier niveau de l'étage bas compté à partir des cellules centrales comportant deux interrupteurs (310, 311) dont chacun est relié à une cellule centrale (101, 102), les deuxième et troisième niveaux comportant chacun un interrupteur (32 ; 33).

2. Circuit selon la revendication précédente, étant de type « buck » unidirectionnel, le ou les interrupteurs (21, 22, 23, 211, 210) de l'étage haut (20) ainsi que l'interrupteur haut (12A, 12B, 12C, 12D) de chaque branche de la ou de chaque cellule centrale (100 ; 101, 102) relié à l'étage haut (20) étant commandables et le ou les interrupteurs (31, 32, 33, 311, 310) de l'étage bas (30) ainsi que l'interrupteur bas (13A, 13B, 13C, 13D) de chaque branche de la ou de chaque cellule centrale (100 ; 101, 102) relié à l'étage bas (30) étant non commandables.

3. Circuit selon la revendication 1, étant de type « boost » unidirectionnel, le ou les interrupteurs (21, 22, 23, 211, 210) de l'étage haut (20) ainsi que l'interrupteur haut (12A, 12B, 12C, 12D) de chaque branche de la ou de chaque cellule centrale (100 ; 101, 102) relié à l'étage haut (20) étant non commandables et le ou les interrupteurs (31, 32, 33, 311, 310) de l'étage bas (30) ainsi que l'interrupteur bas (13A, 13B, 13C, 13D) de chaque branche de la ou de chaque cellule centrale (100 ; 101, 102) relié à l'étage bas (30) étant commandables.

4. Circuit selon la revendication 1, étant de type « bidirectionnel », tous les interrupteurs (21, 22, 23, 211, 210, 12A, 12B, 12C, 12D, 31, 32, 33, 311, 310, 13A, 13B, 13C, 13D) étant commandables.

5. Circuit selon l'une quelconque des revendications précédentes, le point milieu (Sa ; Sb ; Sc ; Sd) étant relié au port correspondant (11A ; 11B ; 11C ; 11D) par l'intermédiaire d'une inductance (LinA ; LinB ; LinC ; LinD).

6. Circuit selon l'une quelconque des revendications précédentes, présentant une configuration dite « symétrique » avec une ligne de bus commune (m) et des lignes de bus de polarités respectivement positive et négative, avec un premier sous-circuit de convertisseur (11) entre la ligne de bus commune (m) et la ligne de polarité positive (b1) et un deuxième sous-circuit de convertisseur (12) entre la ligne de bus commune (m) et la ligne de bus de polarité négative (b2).

7. Procédé de commande d'un circuit selon la revendication précédente, les interrupteurs symétriques entre le premier sous-circuit (11) et le deuxième sous-circuit (12) étant commandés simultanément.

8. Procédé de commande d'un circuit selon la revendication 4, les interrupteurs de l'étage haut (21, 22, 23, 211, 210) et les interrupteurs hauts (12A, 12B, 12C, 12D) des cellules centrales étant commandables par des signaux complémentaires deux à deux de ceux qui commandent les interrupteurs de l'étage bas (31, 32, 33, 311, 310) et les interrupteurs bas (13A, 13B, 13C, 13D) des cellules centrales.

9. Convertisseur de puissance comportant un circuit (1) selon l'une quelconque des revendications 1 à 6 et son circuit de pilotage (17).

10. Installation comportant le convertisseur selon la revendication précédente et une pluralité de sources (18A, 18B, 18C, 18D) dont chacune est reliée à un port respectif (11A, 11B, 11C, 11D).

11. Installation selon la revendication précédente, les sources (18A, 18B, 18C, 18D) étant des panneaux photovoltaïques.
